# FASCICULE DE BREVET EUROPEEN

(11) **EP 3 308 080 B1**
(45) Date de publication et mention de la délivrance du brevet: **27.11.2019**
(21) Numéro de dépôt: 16734434.0
(22) Date de dépôt: 09.06.2016
(51) Int. Cl.: F23R 7/00, F02C 5/12, F23C 13/00, F23C 13/06

(54) **MODULE DE CHAMBRE DE COMBUSTION CVC DE TURBOMACHINE COMPORTANT UNE PRÉCHAMBRE DE COMBUSTION**
TURBINENMOTORBRENNKAMMERMODUL FÜR KONSTANTVOLUMENVERBRENNUNG MIT EINER VORVERBRENNUNGSKAMMER
TURBINE ENGINE CVC COMBUSTION CHAMBER MODULE COMPRISING A PRECOMBUSTION CHAMBER

(30) Priorité: 11.06.2015 FR 1555324
(43) Date de publication de la demande: 18.04.2018
(73) Titulaire: Safran Helicopter Engines, 64510 Bordes (FR)
(72) Inventeur: TALIERCIO, Guillaume, 77550 Moissy-cramayel (FR); VIGUIER, Christophe, Nicolas, Henri, 77550 Moissy-cramayel (FR)
(74) Mandataire: Brevalex
(86) Numéro de dépôt international: PCT/FR2016/051383
(87) Numéro de publication internationale: WO 2016/198792

(56) Documents cités:
- EP-A1- 1 710 425
- US-A- 5 314 329
- US-A1- 2003 108 830
- D. I. BAKLANOV ET AL: "Model of low-thrust pulse detonation device with valveless fuel feed", PROGRESS IN PROPULSION PHYSICS, 1 janvier 2009 (2009-01-01), pages 341-352, XP055260942, Les Ulis, France DOI: 10.1051/eucass/200901341 ISBN: 978-2-7598-0687-4

## Description

### DOMAINE TECHNIQUE

La présente invention se rapporte au domaine des turbomachines, et plus particulièrement au domaine des chambres de combustion de turbomachine du type à combustion à volume constant.

L'invention s'applique à tout type de turbomachines terrestres ou aéronautiques, et par exemple aux turbomachines d'aéronef telles que les turboréacteurs et les turbopropulseurs.

Elle concerne plus précisément un module de chambre de combustion de turbomachine du type à combustion à volume constant comportant une préchambre de combustion, ainsi qu'une turbomachine comportant un tel module de chambre de combustion.

### ÉTAT DE LA TECHNIQUE ANTÉRIEURE

De façon classique, une chambre de combustion de turbomachine fonctionne selon le cycle thermodynamique de Brayton, dit à combustion à pression constante.

Néanmoins, pour un gain de consommation spécifique, il a été envisagé de remplacer la chambre de combustion à cycle de Brayton par une chambre de combustion à cycle thermodynamique de Humphrey, dit à combustion à volume constant ou encore « CVC », mettant en œuvre un processus isochore.

A titre d'exemple, la demande de brevet FR 2 945 316 A1 décrit une réalisation de chambre de combustion du type CVC. La chambre comprend à l'entrée une valve d'admission de gaz comprimé capable de transiter entre une position ouverte et une position fermée, et comporte à la sortie une valve d'échappement de gaz brûlé également capable de transiter entre une position ouverte et une position fermée. Les positions des valves sont pilotées de manière synchronisée afin de mettre en œuvre les trois phases successives du cycle de Humphrey, à savoir admission - combustion - échappement.

Le processus mis en œuvre étant isochore, le cycle de Humphrey impose de conserver la charge durant un certain laps de temps dans un volume physiquement clos. Ce mode de fonctionnement induit un régime pulsé. En effet, l'air du compresseur est admis à l'intérieur de la chambre de combustion. Puis, après fermeture des cames, une étincelle initie la combustion dans la chambre. Une fois cette combustion terminée, la chambre s'ouvre pour laisser s'échapper les gaz chauds vers la turbine pour produire de la puissance, ou directement vers la tuyère pour produire de la poussée aérodynamique.

Plus spécifiquement, le processus de combustion à volume constant d'une chambre de combustion à cycle de Humphrey nécessite un apport d'énergie à chaque cycle de combustion afin de pouvoir déclencher une combustion par propagation d'un front de flamme. En particulier, une telle combustion nécessite une énergie importante et répétée dans le temps.

Parmi les solutions actuelles visant à apporter l'énergie nécessaire à l'allumage d'une chambre de combustion du type CVC, on connaît la solution consistant à générer l'allumage par un système d'allumage par arc électrique. Toutefois, une telle solution impose l'utilisation d'un système robuste et redondant. On connaît également la solution consistant à utiliser les gaz brûlés d'un cycle de combustion précédent ou bien encore ceux d'une chambre de combustion proche ou voisine. Néanmoins, un tel système est très complexe à gérer et peut brider le potentiel intrinsèque du système de combustion. Aussi, les solutions actuelles ne sont pas entièrement satisfaisantes. Le document US 5314329 et EP1710425 divulgue aussi un module de chambre de combustion du type CVC ave une préchambre de combustion.

### EXPOSÉ DE L'INVENTION

L'invention a donc pour but de remédier au moins partiellement aux besoins mentionnés ci-dessus et aux inconvénients relatifs aux réalisations de l'art antérieur.

En particulier, l'invention vise à proposer une solution alternative d'apport en énergie nécessaire à l'allumage d'une chambre de combustion de turbomachine du type à combustion à volume constant.

L'invention a ainsi pour objet un module de chambre de combustion de turbomachine selon la revendication 1.

Grâce à l'invention, il peut être possible de produire, en amont, de la ou des chambres de combustion du type CVC d'un module de combustion conforme à l'invention, par le biais d'une préchambre de combustion, des gaz chauds apportant l'énergie nécessaire à l'allumage de la ou des chambres de combustion du type CVC. En particulier, l'invention peut permettre de fournir une capacité souhaitée de pouvoir permettre l'allumage de la ou des chambres de combustion du type CVC dans des conditions de fonctionnement dites « sévères », notamment en cas de froid et d'altitude élevée. Ainsi, l'invention peut permettre d'embarquer, sur un module de combustion de turbomachine, un système spécifique d'allumage thermique d'une ou de plusieurs chambres de combustion du type CVC, de sorte à limiter la déstabilisation du moteur et à optimiser le rendement du moteur.

Le module de chambre de combustion selon l'invention peut en outre comporter l'une ou plusieurs des caractéristiques suivantes prises isolément ou suivant toutes combinaisons techniques possibles.

De façon avantageuse, la préchambre de combustion est du type à combustion à pression constante, mettant en œuvre un processus isobare.

Ladite au moins une chambre de combustion étant du type CVC, elle comporte avantageusement une valve d'admission de gaz comprimé capable d'adopter une position ouverte ainsi qu'une position fermée dans laquelle elle s'oppose à l'admission de gaz comprimé, et en outre une valve d'échappement de gaz brûlé capable d'adopter une position ouverte ainsi qu'une position fermée dans laquelle elle s'oppose à l'échappement de gaz brûlé en dehors de la chambre.

Par ailleurs, de façon préférentielle, la préchambre de combustion est configurée pour produire majoritairement des gaz brûlés de monoxyde de carbone et de dihydrogène.

En outre, selon une variante de réalisation, le module selon l'invention peut comporter, en aval de la préchambre de combustion et en amont de ladite au moins une chambre de combustion du type à combustion à volume constant, un module catalyseur d'oxydation, permettant notamment d'augmenter le taux de dihydrogène des gaz chauds de combustion alimentant ladite au moins une chambre de combustion du type à combustion à volume constant pour en permettre l'allumage.

Le module selon l'invention comporte une pluralité de chambres de combustion du type à combustion à volume constant réparties autour d'un axe de rotation de la turbomachine.

La préchambre de combustion alimente en gaz chauds de combustion les chambres de combustion du type à combustion à volume constant par l'intermédiaire d'un système du type tiroir tournant.

Par ailleurs, l'invention a également pour objet, selon un autre de ses aspects, une turbomachine, caractérisée en ce qu'elle comporte un module de chambre de combustion tel que défini précédemment.

Le module de chambre de combustion et la turbomachine selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 représente une vue schématique de côté d'un générateur de gaz de turboréacteur comportant un exemple de module de chambre de combustion du type à combustion à volume constant conforme à l'invention, et
- la figure 2 représente une vue schématique de face du module de chambre de combustion de la figure 1.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Dans toute la description, il est noté que les termes amont et aval sont à considérer par rapport à une direction principale F d'écoulement normal des gaz (de l'amont vers l'aval) pour une turbomachine. Par ailleurs, on appelle axe T de la turbomachine, l'axe de symétrie radiale de la turbomachine. La direction axiale de la turbomachine correspond à la direction de l'axe T de la turbomachine. Une direction radiale de la turbomachine est une direction perpendiculaire à l'axe T de la turbomachine. En outre, sauf précision contraire, les adjectifs et adverbes axial, radial, axialement et radialement sont utilisés en référence aux directions axiale et radiale précitées.

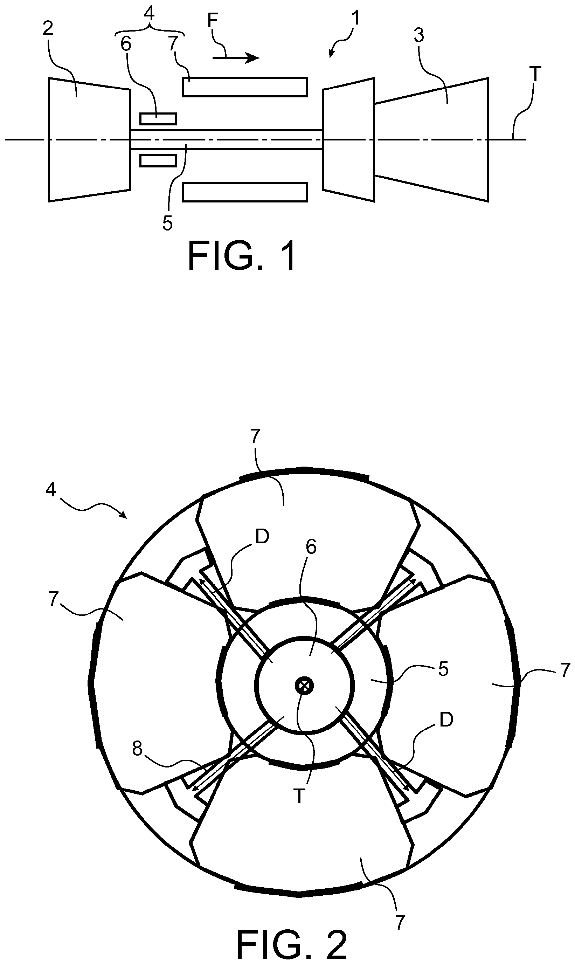

On a représenté en référence à la figure 1, en vue schématique de côté, un exemple de mode de réalisation d'un générateur de gaz 1 de turbomachine d'aéronef, de de préférence un turboréacteur, comportant un exemple de module de chambre de combustion 4 du type à combustion à volume constant CVC conforme à l'invention.

Le générateur de gaz 1 comporte, de façon classique, de l'amont vers l'aval, un ou plusieurs modules de compresseur 2, un module de chambre de combustion 4, et un ou plusieurs modules de turbine 3. De façon habituelle, les modules de compresseur 2 et les modules de turbine 3 sont reliés par un système d'arbres 5, lequel entraîne un récepteur de la turbomachine d'aéronef, par exemple une soufflante (non représentée) dans le cas d'un turboréacteur.

Conformément à l'invention, le module de chambre de combustion 4 comporte une pluralité de chambres de combustion du type CVC 7 et, en amont de celles-ci, une préchambre de combustion 6 apte à produire des gaz chauds de combustion alimentant les chambres de combustion du type CVC 7 pour en permettre l'allumage.

De façon avantageuse, la préchambre de combustion 6 est du type à combustion à pression constante. Elle produit des jets de gaz chauds en amont des chambres de combustion du type CVC 7 pour apporter l'énergie nécessaire à leur allumage.

La préchambre de combustion 6 isobare est tout particulièrement employée en fonctionnement riche pour produire des gaz brûlés dopés majoritairement en monoxyde de carbone CO et en dihydrogène H₂. De cette façon, ces gaz sont propices à l'allumage des chambres principales de combustion du type CVC 7 et favorisent la réduction du délai d'initiation de la combustion par rapport à l'utilisation de gaz brûlés produits à faible richesse en CO et H₂.

La figure 2 représente, en vue schématique de face, transversalement à l'axe de rotation T de la turbomachine, le module de chambre de combustion 4 de la figure 1.

Comme on peut le voir sur cette figure 2, la pluralité de chambres de combustion 7 du type CVC est répartie régulièrement autour du système d'arbres 5 centré sur l'axe moteur T.

Les chambre de combustion du type CVC 7 sont par exemple prévues au nombre de 4, ce nombre n'étant nullement limitatif. Elles sont toutes préférentiellement identiques.

De plus, le nombre de ces chambres de combustion du type CVC 7 est préférentiellement pair, de façon à pouvoir neutraliser deux barillets de chambre diamétralement opposés en cas d'anomalie sur l'une d'elles, et éviter ainsi les dissymétries de flux à l'entrée de la turbine.

En effet, les chambres de combustion du type CVC 7 sont agencées dans une configuration dite à barillet, en étant de préférence destinées à rester fixes par rapport au carter moteur au cours du fonctionnement de la turbomachine.

Chaque chambre de combustion 7 est du type CVC, c'est-à-dire fermée à ses extrémités par deux valves d'admission et d'échappement synchronisées afin de mettre en œuvre les trois phases successives du cycle de Humphrey, à savoir admission - combustion - échappement. Même si elles sont identiques, les chambres de combustion du type CVC 7 sont de préférence volontairement déphasées les unes des autres pour ce qui concerne la mise en œuvre du cycle de Humphrey. A titre d'exemple, une chambre donnée qui est en phase d'admission pourra être adjacente à une autre chambre en phase de combustion, et ainsi de suite.

Par ailleurs, comme on peut le voir sur cette figure 2, la préchambre de combustion 6 isobare alimente en gaz chauds de combustion les chambres de combustion du type CVC 7 par l'intermédiaire d'un système du type tiroir tournant 8, lequel permet la distribution de gaz chauds vers les chambres de combustion du type CVC 7 comme représenté par les flèches D sur la figure 2.

En outre, bien que non représenté, il est également possible d'utiliser, en aval de la préchambre de combustion 6 et en amont des chambres de combustion du type CVC 7, un module catalyseur d'oxydation. Ce catalyseur d'oxydation se trouve alors en sortie de la préchambre de combustion 6 et permet notamment d'augmenter le taux de dihydrogène H₂ des gaz chauds de combustion alimentant les chambres de combustion du type CVC 7 pour en permettre l'allumage. En effet, un taux élevé en dihydrogène est connu pour favoriser la tolérance d'un système de combustion à la dilution par des gaz résiduels. Il peut ainsi être possible d'améliorer la fiabilité de l'ensemble du système proposé.

Bien entendu, l'invention n'est pas limitée à l'exemple de réalisation qui vient d'être décrit. Diverses modifications peuvent y être apportées par l'homme du métier.

L'expression « comportant un » doit être comprise comme étant synonyme de « comportant au moins un », sauf si le contraire est spécifié.

## Revendications

1. Module (4) de chambre de combustion de turbomachine comportant
- une pluralité de chambres de combustion du type à combustion à volume constant (7) réparties autour d'un axe de rotation (T) de la turbomachine,
- en amont de ladite pluralité de chambres de combustion du type à combustion à volume constant (7), une préchambre de combustion (6) apte à produire des gaz chauds de combustion alimentant ladite pluralité de chambres de combustion du type à combustion à volume constant (7) pour en permettre l'allumage,
la préchambre de combustion (6) alimentant en gaz chauds de combustion les chambres de combustion du type à combustion à volume constant (7) par l'intermédiaire d'un système du type tiroir tournant (8).

2. Module selon la revendication 1, **caractérisé en ce que** la préchambre de combustion (6) est du type à combustion à pression constante.

3. Module selon la revendication 1 ou 2, **caractérisé en ce que** la préchambre de combustion (6) est configurée pour produire majoritairement des gaz brûlés de monoxyde de carbone (CO) et de dihydrogène (H₂).

4. Module selon l'une des revendications précédentes, **caractérisé en ce qu'**il comporte en outre, en aval de la préchambre de combustion (6) et en amont de ladite pluralité de chambres de combustion du type à combustion à volume constant (7), un module catalyseur d'oxydation, permettant notamment d'augmenter le taux de dihydrogène (H₂) des gaz chauds de combustion alimentant ladite pluralité de chambres de combustion du type à combustion à volume constant (7) pour en permettre l'allumage.

5. Turbomachine, **caractérisée en ce qu'**elle comporte un module (4) de chambre de combustion selon l'une quelconque des revendications précédentes.

## Patentansprüche

1. Brennkammer-Modul (4) für Turbotriebwerke, welches umfasst:
- eine Vielzahl von Brennkammern des Typs mit Gleichraumverbrennnung (7), die um eine Drehachse (T) des Turbotriebwerks herum verteilt angeordnet sind,
- eine Vor-Brennkammer (6), die in Strömungsrichtung vor dieser Vielzahl von Brennkammern des Typs mit Gleichraumverbrennnung (7) angeordnet ist und geeignet ist, heiße Verbrennungsgase zu erzeugen, mit denen die genannte Vielzahl von Brennkammern des Typs mit Gleichraumverbrennnung (7) gespeist wird, um deren Zündung zu ermöglichen,
wobei die Vor-Brennkammer (6) die Brennkammern des Typs mit Gleichraumverbrennnung (7) über ein Drehventil-System (8) mit heißen Verbrennungsgasen versorgt.

2. Modul nach Anspruch 1,
**dadurch gekennzeichnet,**
**dass** die Vor-Brennkammer (6) eine Brennkammer mit Gleichdruckverbrennnung ist.

3. Modul nach Anspruch 1 oder 2,
**dadurch gekennzeichnet,**
**dass** die Vor-Brennkammer (6) konfiguriert ist, um hauptsächlich Kohlenmonoxyd-Abgase (CO) und zweiwertige Wasserstoff-Abgase (H₂) zu erzeugen.

4. Modul nach einem der vorherigen Ansprüche,
**dadurch gekennzeichnet,**
**dass** es ferner in Strömungsrichtung hinter der Vor-Brennkammer (6) und in Strömungsrichtung vor der genannten Vielzahl von Brennkammern des Typs mit Gleichraumverbrennnung (7) ein Oxydationskatalysator-Modul aufweist, das es insbesondere ermöglicht, den Anteil an zweiwertigem Wasserstoff (H₂) der heißen Verbrennungsgase zu erhöhen, mit denen die genannte Vielzahl von Brennkammern des Typs mit Gleichraumverbrennnung (7) gespeist wird, um deren Zündung zu ermöglichen.

5. Turbotriebwerk,
**dadurch gekennzeichnet,**
**dass** es ein Brennkammer-Modul (4) nach einem der vorherigen Ansprüche aufweist.

## Claims

1. A turbomachine combustion chamber module (4), including:
- a plurality of constant-volume combustion type combustion chambers (7) distributed about an axis of rotation (T) of the turbomachine,
- upstream of said at least one constant-volume combustion type combustion chamber (7), a pre-combustion chamber (6) capable of producing hot combustion gases supplying said at least one constant-volume combustion type combustion chamber (7) to allow the ignition thereof,
the pre-combustion chamber (6) supplying hot combustion gases to the constant-volume combustion type combustion chambers (7) through a rotary distributor type system (8).

2. The module according to claim 1, **characterised in that** the pre-combustion chamber (6) is of the constant-pressure combustion type.

3. The module according to claim 1 or 2, **characterised in that** the pre-combustion chamber (6) is configured to produce predominantly burnt gases of carbon monoxide (CO) and dihydrogen (H₂).

4. The module according to one of the preceding claims, **characterised in that** it further includes, downstream of the pre-combustion chamber (6) and upstream of said at least one constant-volume combustion type combustion chamber (7), an oxidation catalyst module, making it possible in particular to increase the dihydrogen (H₂) rate of the hot combustion gases supplying said at least one constant-volume combustion type combustion chamber (7) to allow the ignition thereof.

5. A turbomachine, **characterised in that** it includes a combustion chamber module (4) according to any of the preceding claims.
